Europäisches Patentamt

European Patent Office

Office européen des brevets

(11) Publication number: **0 098 702**
**A2**

---

(12) **EUROPEAN PATENT APPLICATION**

(21) Application number: **83303465.5**

(22) Date of filing: **15.06.83**

(51) Int. Cl.³: **B 60 N 1/08**

(30) Priority: **02.07.82 GB 8219251**

(43) Date of publication of application: **18.01.84**
**Bulletin 84/3**

(84) Designated Contracting States: **DE FR GB IT SE**

(71) Applicant: **TI COX LIMITED, 177 Lenton Boulevard, Nottingham NG7 2DD (GB)**

(72) Inventor: **Babbs, Frederick William, Mountfield 102A, Cropwell Road, Radcliffe on Trent Nottingham (GB)**

(74) Representative: **Arthur, George Fitzgerald et al, KILBURN & STRODE 30, John Street, London WC1N 2DD (GB)**

(54) **Slide assembly for a vehicle seat.**

(57) A fore-and-aft slide assembly for a vehicle seat comprising relatively longitudinally slidable outer and inner channels (11, 12), the former for fixing to the seat and the latter to the vehicle floor, and a latch lever (24) pivoted on the outer channel (11) for locking the outer channel to the inner channel in a selected one of several positions defined by engagement of a detent (28) on the latch lever with one of a series of notches (30) in the inner channel.

A lug (32) on the outer channel extends through an aperture (31) in the latch lever and provides an achorage for a cantilever spring (33) which both biases the latch lever towards the engaged position and retains the latch lever on the lug.

## SLIDE ASSEMBLY FOR A VEHICLE SEAT

This invention relates to a fore-and-aft slide assembly for a vehicle seat, for enabling the user to adjust the fore-and-aft position of the seat in the vehicle.

The kind of fore-and-aft slide assembly to which this invention relates comprises a pair of relatively longitudinally slidable slide members adapted to be fixed respectively to the seat and to the vehicle, and releasable latch means for locking the slide members against relative longitudinal movement in chosen positions of adjustment.

An example of a fore-and-aft slide assembly of this kind is the subject of British Patent No. 1,295,044.

The releasable latch means of such fore-and-aft slide assemblies should be simple to use, positive in operation so that the seat will not be released inadvertently, and sufficiently robust to withstand the abnormal forces likely to be encountered in emergency braking and some accidents.

Releasable latch means which satisfy those criteria have generally been of relatively expensive construction, consisting of several parts. For instance, the latch means described in the aforementioned patent comprises a locking plate, a coil spring, and a pivot pin and another pin which acts as a spring abutment and carries a retainer for the locking plate, both of which pins have to be welded to one of the slide members.

According to the present invention, a fore-and-aft slide assembly for a vehicle seat comprises a pair of relatively longitudinally slidable slide members adapted to be fixed respectively to the seat and to the vehicle, and, for locking the slide members against relative longitudinal movement in chosen positions of adjustment, releasable latch means comprising a latch lever arranged to pivot about a pivotal axis fixed relative to one slide member and carrying at least one locking detent arranged to engage in and disengage from at least one of a series of notches arranged along the other slide member, one of the slide members having a lug which projects through an aperture in the latch lever large enough to permit pivotal movement of the latch lever, the portion of the lug which projects through the latch aperture providing an anchorage for a spring which both resiliently biases the latch lever towards the engaged position and retains the latch lever on the lug.

The releasable latch means of this invention can be of simpler design and be less expensive to manufacture than, for example, the latch means described in the aforementioned patent. Thus, at least the second pin is dispensed with, and the need for welding operations can be eliminated. Instead of a coil spring, a simpler cantilever spring can be used, with one end portion anchored to the lug and the other end portion resiliently engaging the latch lever to bias the latch lever towards the engaged position.

To increase the security of the locking of the slide members, the latch lever may carry at least two spaced detents arranged to engage at least two spaced notches in the said other slide member when the latch lever is in the engaged position.

Preferably, the slide members comprise inner and outer channels with balls or rollers disposed between opposed surfaces of both channels, which surfaces define longitudinal races for the balls or rollers.

The invention may be carried into practice in various ways, and two embodiments are described by way of example, with reference to the accompanying drawings in which:-

FIGURE 1 is a side elevation of a fore-and-aft seat slide assembly embodying the invention for a motor car, in the rearmost position of adjustment;

FIGURE 2 is a plan view corresponding to FIGURE 1;

FIGURE 3 is an end view;

FIGURE 4 is a view corresponding to FIGURE 1 of an alternative embodiment; and

FIGURE 5 is a view corresponding to FIGURE 2 of the alternative embodiment.

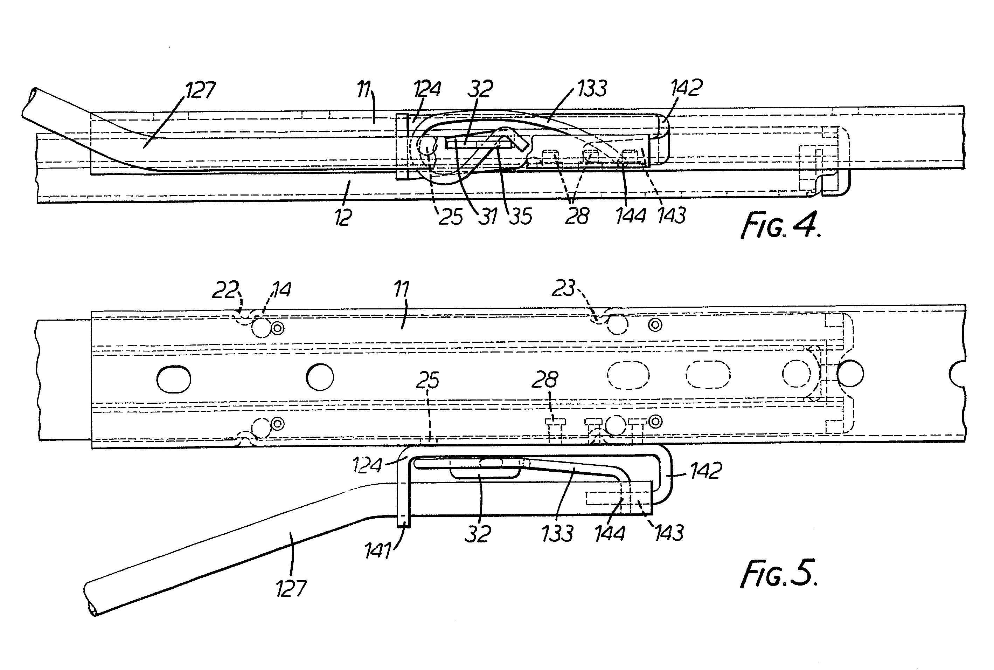

As shown in the drawings, the fore-and-aft slide assembly includes sheet steel outer and inner channel shaped members 11 and 12, (hereinafter called channels) of which the first 11, is to be secured to the underside of a seat while the second, 12, is to be secured to the floor of the car. The inner channel 12 has the upper edges of its side walls bent outwards and downwards as shown at 13 in FIGURE 3 to define with the corners of the outer channel 11 longitudinal races for steel balls

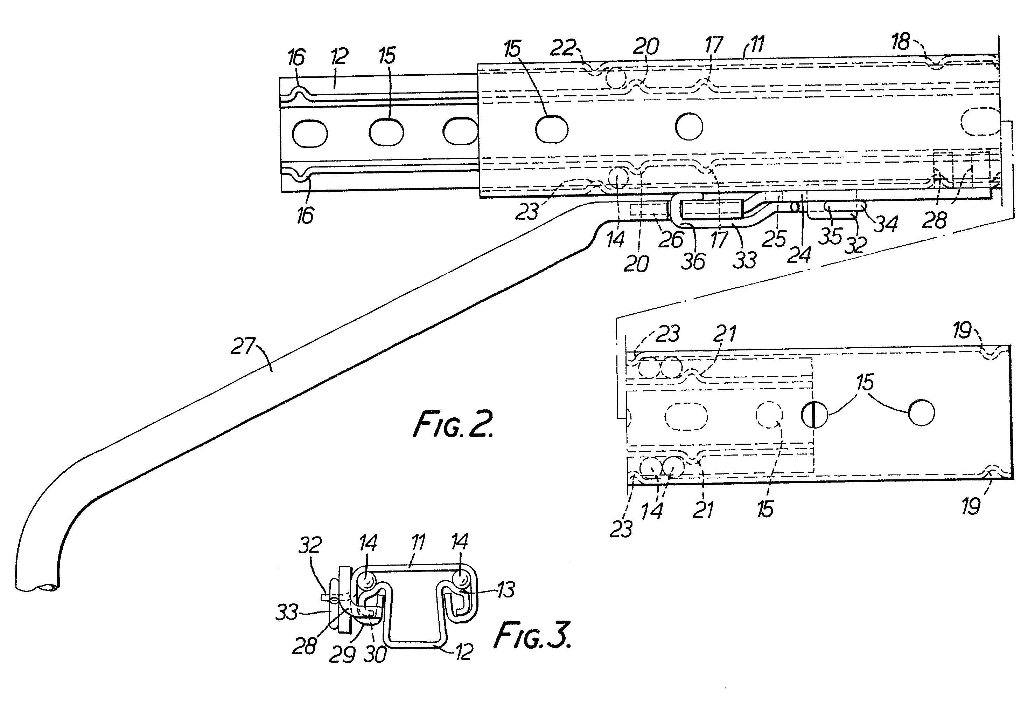

There are three balls in each longitudinal race, one ball at the front and two at the rear as shown in broken lines in FIGURE 2, making six balls in all.

The seat can be moved easily forwardly and rearwardly in relation to the floor by rolling of the balls along races with substantially rolling point
or line contact between the balls and the channels.

The central web region of each channel has holes
15 for fixing bolts (not shown) for securing the channels
to the seat and to the floor. The heads of such bolts
being disposed in the interiors of the respective
channels, do not limit the amount of permissible
fore-and-aft movement

The limits of forward movement are determined
by indentations 16 and 17 in the inner channel 12, and
18 and 19 in the outer channel 11. The limits of
rearward movement are determined by indentations 20 and
21 in the inner channel 12, and 22 and 23 in the outer
channel 11. It will be seen in FIGURE 2 that in the
rearmost position as shown, the two rear balls in each
longitudinal race are engaged between the indentations
21 of the inner channel and 23 of the outer channel,
while the front ball in each race is engaged between the
indentations 20 of the inner cnannel and 22 of the outer
channel. In the foremost position, the two rear balls
are engaged between the indentations 17 of the inner
channel and 19 of the outer channel, while the front
ball is engaged between the indentations 16 of the inner
channel and 18 of the outer channel.

The outer channel 11, to which the seat is attached
is locked relative to the inner channel 12, fixed to
the floor, in any desired position of adjustment, by a
latch lever 24 which is pivotally mounted at 25 on
the side of the outer channel 11. The pivotal
mounting 25 may comprise a cylindrical protuberance pressed out on the inner side of the latch lever and fitting into a hole formed in the side of the outer channel 11. Alternatively, it could be a pin welded to the side of the channel which fits into a hole in the latch lever.

The latch lever 24 has a forward extension 26 for fitting into a removable release member 27 in the form of a cross piece extending below the front of the seat between a pair of similar fore-and-aft slide assemblies, on either side of the seat. At the rear, the latch lever has at least one prong, preferably at least two parallel prongs, which is, or are, bent at right angles as shown in FIGURE 3, the two prongs forming a pair of spaced detents 28, which pass through slots 29 in the side wall of the outer channel 11 and into any adjacent two of a number of corresponding notches 30 spaced along the length of the side wall of the inner channel 12.

The latch lever 24 has an aperture 31 through which extends a lug 32 bent out from the side wall of the outer channel 11. The vertical height of the aperture 31 is sufficiently larger than the thickness of the lug 32 to permit the necessary pivotal movement of the latch lever about the pivot 25, but the aperture is also small enough to prevent excessive pivotal movement.

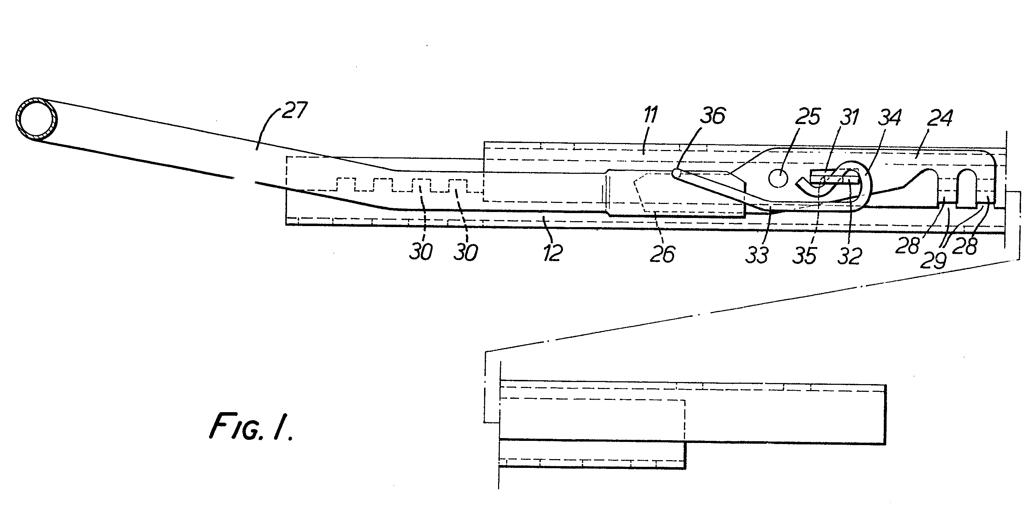

The latch lever 24 is spring biased anticlockwise (FIGURE 1) towards the engaged position, i.e. the position in which the detents 28 are urged upwards into the notches 30, by a spring 33. The spring is arranged as a cantilever with its rear end portion 34 anchored to the lug 32 by being passes around the back of the lug, down through an aperture 35 in the lug and then up at the front of the lug, so that it engages the lug on opposite sides of the aperture 35 and at the front lower corner and the rear upper corner. The front end 36 of the spring engages in a notch in the upper edge of the forward extension 26 of the latch lever 24. The spring is pre-stressed so as to tend to straighten out, that is to say, it is continually pressing down on the forward extension 26 and exerting a corresponding reaction on the lug 32. To release the detents 28 from the notches 30 and so release the seat for sliding adjustment, the release member 27 is raised, thereby pivoting the latch lever clockwise and further stressing the spring 33.

The spring 33 has another function besides biasing the latch lever 24 towards the engaged position. It also serves to retain the latch lever 24 on the lug 32 and so hold the latch means in the assembled position.

In the alternative embodiment shown in FIGURES 4 and 5, most of the components are the same as or very similar to corresponding components in the first embodiment, and they have the same reference numerals. In this case however, the latch lever 124 which is also pivoted at 25 to the slide 11 has a front portion 141 which bends inwardly and is formed as a fork with two vertically spaced horizontal prongs between which the rearward end of the release member 127 is a snug fit. At

0098702

the rear the latch lever 124 bends inwardly at 142 and then forwardly at 143 as a tapered tongue which fits into the end of the rearmost extension of the release member 127.

The cantilever spring 133 passes through the hole 35 in the lug 32, as shown best in FIGURE 4, and then curves down around and back over the lug and then down and back to an outwardly extending end 144 where it engages in a notch in the underside of the rear end of the release member 127.

As with the embodiments of FIGURES 1-3 the spring biases the latch lever 124 towards the engaged position and also retains the latch lever on the lug 32 to retain the components assembled. The release member 127 engages with the latch lever 124 both at the front 141, and at the rear 143.

0098702

.8.
CLAIMS

1      A fore-and-aft slide assembly for a vehicle seat, comprising a pair of relatively longitudinally slidable slide members (11,12) adapted to be fixed respectively to the seat and to the vehicle, and, for locking the slide members against relative longitudinal movement in  chosen positions of adjustment, releasable latch means comprising a latch lever (24) arranged to pivot about a pivotal axis (25) fixed relative to one slide member (11) and carrying at least one locking detent (28) arranged to engage in and disengage from at least one of a series of notches (30) arranged along the other slide member (12) one of the slide members (11) having a lug (32) which projects through an aperture (31) in the latch  lever (24) large enough to permit pivotal movement of the latch lever, the portion of the lug which projects through  the aperture providing an anchorage for a spring (33) which both resiliently biases the latch lever towards the engaged position and  retains the latch lever on the lug.

2.     A slide assembly as claimed in Claim 1 in which the spring is arranged as a cantilever with one end portion (34) anchored to the lug and the other end portion (36,144) resiliently engaging the latchlever  to bias the latch lever towards the engaged position.

3.     A slide assembly as claimed in Claim 2 in which the said one end portion (34) of the spring passes through an aperture (35) or notch in the projecting portion of the lug and engaged the lug on opposite sides of the aperture or notch therein.

4.    A slide assembly as claimed in any of the preceding claims in which the latch lever carries at least two spaced detents (28) arranged to engage at least two spaced notches (30) in the said other slide member when the latch lever is in the engaged position.

5.    A slide assembly as claimed in any of the preceding claims in which the slide members comprise inner and outer channels with balls or rollers (14) disposed between opposed surfaces of both channels  which surfaces define longitudinal races for the balls or rollers.

6.    A slide assembly as claimed in Claim 5 in which the notches are formed in the inner channel (12) and the outer channel (11) carries the latch lever, the lug and the spring.

7.    A mounting for a vehicle seat comprising a pair of slide assemblies as claimed in any of the preceding claims and a removable release member (27) capable of being interconnected with the latch lever of each slide assembly, the release member then extending transversely between the slide assemblies.

8.    A mounting as claimed inClaim 7 in which the release member has a rearwardly extending portion arranged to fit over a part of each latch lever .

FIG. I.

27  11  36  25  31  34  24
30  30  12  26  33  35  32  28  29  28

1/3

0098702

0098702

2/3

Fig.2.

Fig.3.

**Fig. 4.**

**Fig. 5.**